# EUROPÄISCHE PATENTSCHRIFT

(11) **EP 3 925 023 B1**
(45) Veröffentlichungstag und Bekanntmachung des Hinweises auf die Patenterteilung: **10.05.2023**
(21) Anmeldenummer: 20707548.2
(22) Anmeldetag: 15.01.2020
(51) Int. Cl.: H01M 4/04, H01M 4/139, H01M 10/054, H01M 10/0562, H01M 4/58

(54) **FESTKÖRPERBATTERIE SOWIE VERFAHREN ZUR HERSTELLUNG DERSELBEN**
SOLID STATE BATTERY AND METHOD FOR PRODUCING SAME
BATTERIE À ÉLECTROLYTE SOLIDE ET PROCÉDÉ DE PRODUCTION CORRESPONDANT

(30) Priorität: 06.02.2019 DE 102019000841
(43) Veröffentlichungstag der Anmeldung: 22.12.2021
(73) Patentinhaber: Forschungszentrum Jülich GmbH, 52425 Jülich (DE)
(72) Erfinder: LAN, Tu, 52428 Jülich (DE); MA, Qianli, 52428 Jülich (DE); TIETZ, Frank, 52156 Monschau (DE); GUILLON, Olivier, 52428 Jülich (DE)
(86) Internationale Anmeldenummer: PCT/DE2020/000004
(87) Internationale Veröffentlichungsnummer: WO 2020/160719

(56) Entgegenhaltungen:
- WO-A2-2017/116599
- US-A1- 2009 226 816
- US-B1- 8 304 115

## Beschreibung

Die vorliegende Erfindung bezieht sich auf eine Festkörperbatterie, die bei Raumtemperatur mit hoher Kapazitätsausbeute und guten Zyklisierungseigenschaften betrieben werden kann, sowie auf ein Verfahren zur Herstellung einer solchen Festkörperbatterie.

### Stand der Technik

Wieder aufladbare Batterien (Sekundärbatterien oder auch Akkumulatoren) spielen heutzutage eine wichtige Rolle im täglichen Leben. Unter den handelsüblichen wiederaufladbaren Batterien sind Lithium-Ionen-Batterien (LIBs) aufgrund ihrer hohen Energiedichte und der langen Lebensdauer weit verbreitet.

Allerdings nimmt die Besorgnis über die schwindenden Reserven an Lithiumressourcen und steigende Kosten von LIBs stark zu, da der Batteriemarkt in den letzten Jahren stark wächst. Natrium-Ionen-Batterien (NIBs) weisen viele Ähnlichkeiten zu LIBs auf und gelten aufgrund der besseren Verfügbarkeit und der niedrigeren Kosten für die natriumhaltigen Rohstoffe als vielversprechende Alternative, die sich besonders für stationäre Anwendungen, wie Energiespeicher für Wind- oder Solarkraftwerke, eignet.

Im Unterschied zu den vorgenannten verbreiteten Lithium-Ionen-Batterien mit einem flüssigen Elektrolyt setzen Festkörper-Batterien auf einen festen Elektrolyt, etwa aus Keramik, was sie chemisch und von der Temperatur her stabil macht. Gefahren durch die Entflammbarkeit der flüssigen Elektrolyte werden dadurch vermieden.

Für Natrium-Ionen-Batterien ist beispielsweise ein anorganischer, borhaltiger Elektroyt bekannt, der Natrium-Ionen erlaubt, relativ frei zu zirkulieren, im Vergleich zu den flüssigen Elektrolyten in Lithium-Ionen-Batterien jedoch nicht brennbar ist.

Ähnlich wie bei den Lithium-Ionen-Batterien zieht daher das "All-Solid-State"-Design der Natrium-Ionen-Batterien, bei dem ausschließlich feste Materialien eingesetzt werden, immer mehr Aufmerksamkeit aus dem akademischen und industriellen Bereich auf sich. Grundsätzlich können Festkörperbatterien im Vergleich zu den Lithium-Ionen-Batterien auch mehr Energie speichern.

Durch die Vermeidung der Flüssigkeit in den Batterien weisen Festkörperbatterien (engl. all-solid-state) zudem die Vorteile auf, dass sie nicht brennbar sind und durch die dichte keramische Membran als Trennung der Elektrodenräume kein unerwünschter Materialtransport stattfinden kann. Dadurch werden bekannte Kreuzkontaminationen in Lithium-Ionen-Batterien vermieden.

Ferner kann bei idealer Ausgestaltung der Elektrolyt- und Elektrodenwerkstoffe eine Degradation der Kapazität durch Grenzflächenreaktionen, insbesondere an der Anode ("Solid-Electrolyte-Interface-Bildung" durch Reaktion von Graphit mit flüssigem Elektrolyten in Lithium-Ionen-Batterien) vermieden werden.

Anders als herkömmliche Lithium-Ionen-Batterien kommt die neue Festkörperbatterie zudem weitgehend ohne giftige oder bedenkliche Stoffe als Zusatzstoffe in Flüssigelektrolyten aus.

Die bestehende Technik zur Herstellung von Lithium- oder Natrium-Festkörperbatterien (NSSBs) ist jedoch noch nicht zufriedenstellend. Bislang gibt es keine kommerzialisierten Natrium-Festkörperbatterien, und die meisten der in wissenschaftlichen Zeitschriften beschriebenen Natrium-Festkörperbatterien können bislang nur bei Temperaturen über 65 °C betrieben werden.

In einem Bericht ^{[1]} über den Betrieb von Natrium-Festkörperbatterien bei Raumtemperatur wird eine relativ hohe Kapazitätsabnahme (80 % Verlust nach 10 Zyklen) und ein niedriger coulombscher Wirkungsgrad (weniger als 75 % im ersten Zyklus, weniger als 50 % im dritten Zyklus) offenbart, obwohl die Stromdichte für Ladung/Entladung eher niedrig war (5 A/cm²).

Unter dem coulombschen Wirkungsgrad (Coulomb-Wirkungsgrad, Ladewirkungsgrad) wird das Verhältnis von entnommenen Amperestunden zu den aufgeladenen Amperestunden verstanden. Der coulombsche Wirkungsgrad gibt Aufschluss über die Ladungsverluste der Batterie beim Laden und Entladen.

Bislang werden beide Elektroden oder mindestens eine der Elektroden von Natrium-Festkörperbatterien durch mechanisches Mischen von Elektroden- und Elektrolytmaterialien hergestellt. Der Kontakt zwischen dem Elektrolyten in Form eines Natrium-Ionenleiters und den festen Elektrodenmaterialien für Natrium-Festkörperbatterien basiert auf den begrenzten intergranularen Grenzflächen beider festen Phasen. Dies steht im Gegensatz zu den modernen Natrium-Ionen-Batterien mit flüssigen Elektrolyten, die einen vollhomogenen Kontakt zwischen den flüssigen Natrium-Ionenleitern und den Elektrodenmaterialien aufweisen. Der begrenzte Grenzflächenkontakt in Natrium-Festkörperbatterien wird beim Laden und Entladen häufig geschädigt, wenn sich das Volumen der Elektrodenmaterialien durch die Einlagerung und Extraktion von Natrium-Ionen verändert. Dieses Problem führt regelmäßig zu einer Instabilität der Elektrodenstruktur, die sowohl in Lithium- als auch in Natrium-Festkörper-batterien häufig beobachtet wird.

Um das Problem zu lösen, müssen neue Elektroden von Festkörperbatterien bereitgestellt werden, bei denen Ausdehnung und Schrumpfung von Energiespeichermaterialien während des Betriebs die strukturelle Stabilität der Elektroden nicht negativ beeinflusst wird.

Die Infiltration ist beispielsweise eine vielversprechende Methode, um das vorgenannte Problem zu lösen, z.B. durch das Einbringen von nanometergroßen Elektrodenpartikeln in die Poren des Festelektrolyten unter Verwendung einer Suspension. Dabei wäre der verwendete Festelektrolyt die mechanisch tragende Komponente der Batteriezellen, und die Volumenänderung der Elektrodenmaterialien würde im Porenraum stattfinden, was die keramische Hauptstruktur der Elektroden und der Grenzflächen nicht negativ beeinflussen würde.

Die Infiltration selbst ist kein neues Verfahren, insbesondere wenn nanometergroße Elektrodenpartikel verwendet werden. Sie wurde bereits umfassend in anderen elektrochemischen Geräten wie Festoxid-Brennstoffzellen, Festoxid-Elektrolysezellen und Membran-Separatoren usw. eingesetzt.

Die Infiltration wurde jedoch bislang noch nicht erfolgreich im Zusammenhang mit der Herstellung von Elektrodenmaterialien für wieder aufladbare Natrium-Batterien eingesetzt.

Aus einem Artikel von M. Kotobuki et al.^{[2]} ist beispielsweise die Herstellung einer wiederaufladbaren Lithium-Ionen-Batterie mit einer 3-dimensionalen geordneten makroporösen Struktur (3DOM) bekannt, bei der zunächst eine mille-feuille-Struktur umfassend Li_{0,35}La_{0,55}TiO₃ als Elektrolyt hergestellt wird, und wobei in die beiden äußeren porösen Schichten jeweils LiMn₂O₄ infiltriert wurde. Erste Untersuchungen zeigten die prinzipielle Eignung einer solchen Batterie mit einer Arbeitsspannung von mehr als 1,0 V.

Ferner berichten Y. Ren et al ^{[3]} über eine Infiltration bei der Herstellung von Elektrodenmaterialien für Lithium-Batterien mit einem Li₇La₃Zr₂O₁₂ (LLZO) basiertem Elektrolyt. Danach wird zunächst eine monolithisch gesinterte Tablette mit einer porösen und einer dichten Schicht umfassend ein Aluminium aufweisendes Li_{6,75}La₃Zr_{1,75}Ta_{0,25}O₁₂ (LLZTO) Elektrolytmaterial hergestellt. In die poröse Li_{6,75}La₃Zr_{1,75}Ta_{0,25}O₁₂-Schicht wird LiCoO₂ als aktives Kathodenmaterial über ein Sol-Gel-Verfahren infiltriert und die dichte Schicht mit einer metallischen Li-Anode kontaktiert. Die dort hergestellten Lithium-Ionen-Batterien zeigen jedoch nachteilig eine hohe Degradation (30 % nach 10 Zyklen) während des Ladens und Entladens und einen recht niedrigen coulombschen Wirkungsgrad (34 % für den ersten Zyklus, 60 % für den zweiten, 80 % für den zehnten Zyklus).

Ein möglicher Grund für die insgesamt ungenügende Leistung der vorgenannten wieder aufladbaren Lithium-Batterie könnte die unzureichende Ionenleitfähigkeit des verwendeten keramischen Elektrolyten sein.

Die beste Oxidkeramik für Lithium-Ionen ^{[4]} (Li_{6,55}Ga_{0,15} La₃Zr₂O₁₂ weist bei Raumtemperatur eine Lithiumionenleitfähigkeit von 1,3 × 10⁻³ S/cm auf, während die Leitfähigkeit der besten Oxidkeramik für Natrium-Ionen, wie Na_{3,4}Sc_{0,4}Zr_{1,6}Si₂PO₁₂ (NASICON) aus DE 102015013155 A1 oder ß"-Aluminiumoxid ^{[5]} mit 3 bis 5 × 10⁻³ S/cm regelmäßig viel höher ist. Zudem weisen auch andere Keramiken, wie beispielsweise Sulfide, Thiophosphate oder auch closo-Borane gute Leitfähigkeitswerte auf.

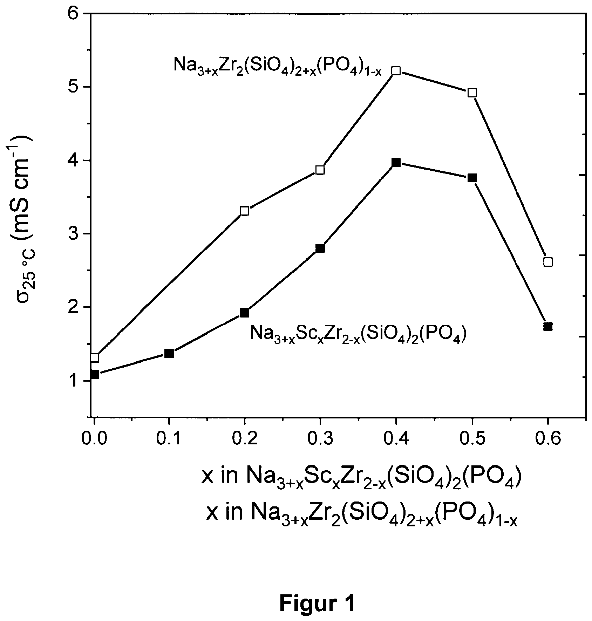

Figur 1 zeigt die ionische Gesamtleitfähigkeit bei 25 °C in Abhängigkeit von der Zusammensetzung für die Mischungsreihen Na₃₊ₓZr₂(SiO₄)₂₊ₓ(PO₄)₁₋ₓ und Na₃₊ₓScₓZr₂₋ₓ(SiO₄)₂(PO₄). Für beide Reihen ergibt sich die höchste Leitfähigkeit bei x = 0,4.

Ferner ist aus US 2014/0287305 A1 eine Lithium-Festkörperbatterie bekannt, bei der der mehrschichtige Elektrolyt einen porösen und einen dichten Bereich aufweist, wobei der poröse Bereich zumindest teilweise Anodenmaterial oder Kathodenmaterial aufweist. Weitere relevante Dokumente sind US 8 304 115 B1, US 2009/226816 A1 und WO 2017/116599 A2.

### Aufgabe und Lösung

Die Aufgabe der Erfindung ist es, eine verbesserte Elektrode für eine Festkörperbatterie bereit zu stellen, die einen effektiven Betrieb der Festkörperbatterie bei Raumtemperatur, eine hohe Kapazitätsausbeute und gute Zyklisierungseigenschaften ermöglicht.

Ferner ist es die Aufgabe der Erfindung, ein Herstellungsverfahren für die vorgenannte Elektrode anzugeben.

Die Aufgaben der Erfindung werden gelöst durch ein Verfahren zur Herstellung einer Elektrode für eine Festkörperbatterie mit den Merkmalen des Hauptanspruchs sowie durch eine Elektrode bzw. eine Festkörperbatterie mit den Merkmalen gemäß den Nebenansprüchen.

Vorteilhafte Ausgestaltungen des Verfahrens und der Elektrode ergeben sich aus den jeweils darauf rückbezogenen Ansprüchen.

### Gegenstand der Erfindung

Im Rahmen der Erfindung wurde herausgefunden, dass die Infiltration ein geeignetes Mittel bei der Herstellung von Elektroden für wieder aufladbare Festkörperbatterien darstellen kann. Bei der Infiltration von Nanopartikeln eines aktiven Elektrodenmaterials in ein Gerüst aus Festelektrolyt (poröse Elektrolytschicht) zur Herstellung einer Elektrode wird vorteilhaft die Hauptkeramikstruktur dieser Elektrode beim Laden/Entladen nicht negativ beeinflusst. Dadurch kann eine relativ hohe Zyklenfestigkeit während des Betriebs einer wieder aufladbare Festkörperbatterie umfassend eine solche Elektrode bewirkt werden.

Anders als bislang bekannt, wird bei dem erfindungsgemäßen Verfahren zur Herstellung einer Elektrode für eine Festkörperbatterie vorgeschlagen, nicht bereits aktives Elektrodenmaterial in Form von Nanoteilchen in eine poröse Festelektrolytschicht einzubringen, sondern mit Hilfe eines Infiltrationsfluids lediglich einen Vorläufer dieses Elektrodenmaterials bis tief in die offenen Poren des Festelektrolyten einzubringen, und diesen Vorläufer erst durch eine Wärmebehandlung in Form einer Sinterung in reduzierender Atmosphäre (hier z. B. Ar/2% H₂) anschließend *in-situ* zu aktivem Elektrodenmaterial zu synthetisieren, welches dann vorzugsweise homogen verteilt auf der Oberfläche der Poren der porösen Festelektrolytschicht angeordnet ist.

Die reduzierende Atmosphäre ist notwendig, um einerseits das Kathodenmaterial in seiner reduzierten Form herzustellen bzw. die darin enthaltenden valenzwechselnden Kationen in ihre niedervalente Variante zu bringen (hier V³⁺, gilt aber auch für die Stabilisierung der Kationen Fe²⁺, Cr³⁺, Mn²⁺, Co²⁺).

Andererseits ist erfindungsgemäß die Infiltrationslösung so gestaltet, dass organische Zusätze (hier beispielsweise Ethylamin) zu Kohlenstoff umgewandelt werden können, was vorteilhaft zu einer Erhöhung der elektronischen Leitfähigkeit führt, insbesondere dann, wenn das Kathodenmaterial entladen wird und selbst an elektronischer Leitfähigkeit verliert. Der Zusatz von wenigstens einem organischen Zusatz (z. B. Ethylamin) bewirkt somit nicht nur eine bessere Infiltration durch eine starke Verringerung der Oberflächenspannung des Infiltrationsfluids, sondern dient zudem als notwendige Kohlenstoffquelle. Als organische Zusätze, die zumindest teilweise zu Kohlenstoff umgewandelt werden können, können neben Ethylamin auch noch andere wasserlösliche und leicht reduzierbare organische Verbindungen wie z B. Zuckerderivate, Polyether, Polyalkohole oder Porphyrine zum Einsatz kommen.

Die Erfindung bezieht sich auf die Herstellung von Elektroden, insbesondere auf die Herstellung von Kathoden, wobei diese für den Einsatz in Festkörperbatterien, z. B. Lithium-Batterien, Lithium/Sauerstoff-Batterien oder Natrium/Sauerstoff-Batterien, geeignet sind. Das erfindungsgemäße Verfahren ist darüber hinaus aber auch für die Herstellung von Anoden geeignet.

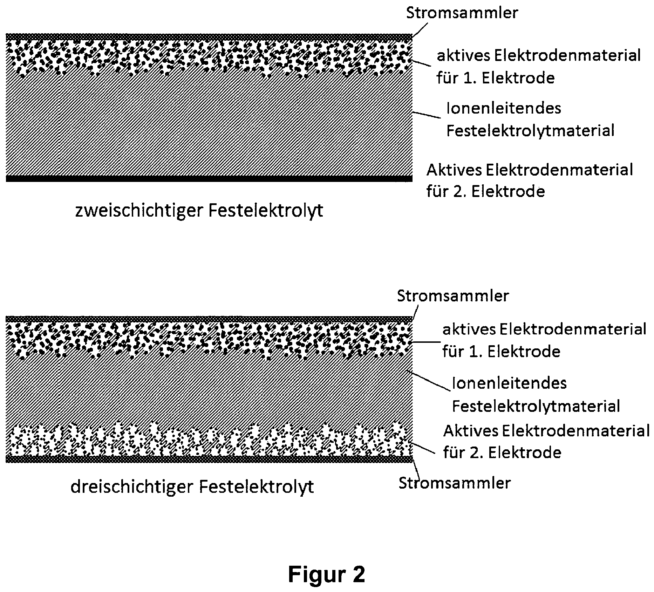

Die schematische Darstellung einer Festkörperbatterie umfassend wenigstens eine erfindungsgemäße Elektrode ist in Figur 2 dargestellt.

Der erste Schritt des erfindungsgemäßen Herstellungsverfahrens für eine Elektrode einer Festkörperbatterie ist die Bereitstellung eines mehrschichtigen Festkörperelektrolyten, umfassend wenigstens eine poröse und wenigstens eine dichte Schicht, wobei als dichte Schicht eine Schicht bezeichnet wird, die mehr als 95 % der theoretischen Dichte aufweist.

Ein solcher keramischer Festelektrolyt kann beispielsweise durch Sinterung eines entsprechenden Grünkörpers aus ausgewählten Elektrolytmaterialien hergestellt werden.

Als Festelektrolyt kann für das erfindungsgemäße Verfahren sowohl ein Zweischichtsystem mit einer porösen und einer dichten Schicht, als auch ein Dreischichtsystem mit einer mittleren, dichten sowie zwei weiteren äußeren, porösen Schichten eingesetzt werden.

Bei einem zweischichtigen Festelektrolyten mit einer porösen und einer dichten Schicht wird die poröse Schicht erfindungsgemäß in eine Kathode oder in eine Anode umgewandelt, während die jeweils andere Elektrode (Anode bzw. Kathode) beim Zusammenbau der Batterie in einem letzten Bearbeitungsschritt beispielsweise später auf die andere Seite der dichten Schicht des zweischichtigen Festelektrolyten angeordnet werden kann.

Bei Verwendung eines dreischichtigen Festelektrolyten, mit einer mittleren, dichten sowie zwei äußeren, porösen Schichten, können die beiden äußeren, porösen Schichten vorzugsweise direkt für die Herstellung einer Anode und einer Kathode verwendet werden.

Die dichte Schicht des Festelektrolyten umfasst vorzugsweise je nach gewähltem Batterietyp ein Na-lonen oder Li-Ionen leitendes Material mit einer hohen Gesamt-Ionenleitfähigkeit bei Raumtemperatur, welche vorteilhaft für Li-Ionenleiter bei über 1 mS/cm und für Na-Ionenleiter bei über 3 mS/cm liegen sollte, aber nicht weniger als 1 mS/cm betragen sollte. Bei Festelektrolyten setzt sich die "Gesamt-Ionenleitfähigkeit" aus den Anteilen aus lonenleitfähigkeit im Korninneren und Ionenleitfähigkeit der Korngrenzen zusammen. Da die elektronische Leitfähigkeit vernachlässigbar ist, wird bei Festelektrolyten häufig der Begriff Leitfähigkeit als Synonym für die "Gesamt-Ionenleitfähigkeit" verwendet.

Im Weiteren wird die Erfindung überwiegend anhand einer besonderen Ausführungsform der Erfindung, insbesondere einer Natrium-Ionen-Festkörperelektrode bzw. -Festkörperbatterie erläutert, ohne sich darauf einzuschränken zu wollen.

Der Fachmann wird im Rahmen seines Fachwissens zunächst denken, dass die Erfindung leicht auf Festkörperelektroden bzw. -batterien mit anderen Alkalimetall-Ionen anwendbar ist. Bei genauerer Betrachtung zeigt sich jedoch, dass sich eine einfache Analogie zum leichteren als auch zum schwereren Homologen des Natriums nicht ergibt. So besitzen die oben bereits erwähnten Na-Ionenleiter elektronische Leitfähigkeiten bis zu 5 mS/cm, analoge Zusammensetzungen des Lithiums sind bisher nicht bekannt und ähnliche Zusammensetzungen haben eine sehr schlechte Leitfähigkeit. In den Systemen Li₃₋ₓSc₂₋ₓZrₓ(PO₄)₃ ^{[6]} und Li₃₊ₓSc₂(SiO₄)ₓ(PO₄)₃₋ₓ ^{[7]} wurden nur elektronische Leitfähigkeiten zwischen 10⁻⁶ und 10⁻⁵ S/cm berichtet. Zusammensetzungen dieser Art sind vom Kalium nicht bekannt. Lithiumverbindungen mit NASICON-Struktur sind allerdings bekannt und erreichen für Li₁₊ₓAlₓTi₂₋ₓ(PO₄)₃ mit x = 0,3 - 0,5 die höchsten Leitfähigkeiten von 0,6 - 1,5 * 10⁻³ S/cm ^{[8]} bei Raumtemperatur. Dagegen werden für Na₁₊ₓAlₓTi₂₋ₓ(PO₄)₃ nur Werte von ca. 10⁻⁷ S/cm erreicht ^{[9]} und analoge Kaliumverbindungen sind Isolatoren und kristallisieren nicht in der NASICON-Struktur.

Auch von Elektrodenmaterialien ist bekannt, dass die analogen Li- und Na-Materialien sehr unterschiedliches physikalisches und (elektro)chemisches Verhalten zeigen ^{[10e]}, so dass sehr sorgfältig geprüft werden muss, ob ein bekanntes Li-haltiges Material auch als Na-haltige Variante sinnvoll einsetzbar ist und umgekehrt.

Mögliche und geeignete Na-Ionen leitende Materialien für den mehrschichtigen Festelektrolyten sind beispielsweise β-Aluminiumoxid (Na₂O·11Al₂O₃) oder ß"- Aluminiumoxid (Na₂O·5Al₂O₃), die oftmals als Phasengemisch auftreten (Na-ß/ß"-Aluminiumoxid) sowie Natrium-Super-Ionenleiter (NASICON) in Form von A_{1+x+y}M'ₓM"₂₋ₓ(XO₄)_{3-y}(SiO₄)_{y}, mit A = Na; M' = Hf, Zr; M" = La - Lu oder Sc oder Y und X = P oder As und mit 0 < x < 2 und 0 < y < 3. Unter der Bezeichnung La - Lu werden die Lanthanoide La, Ce, Pr, Nd, Pm, Sm, Eu, Gd, Tb, Dy, Ho, Er, Tm, Yb und Lu verstanden.

Effektive Li-Ionen leitende Materialien für den bereitgestellten Festkörperelektrolyten sind beispielsweise analoge Ionenleiter mit A = Li; M' = Ti, Ge, Hf, Zr; M" = Al, Ga, Sc, Y, La - Lu und X = P oder As.

Ferner kommen Granate in Betracht wie z. B. Li₇₋₃ₓM'ₓLa₃Zr₂M"yO₁₂ mit M' = AI, Ga oder Li₇₋ₓLa₃Zr₂₋ₓM"ₓO₁₂ mit = Ta, Nb bzw. Perowskite wie z. B. Li_{0,35}La_{0,55}TiO₃.

Die poröse Schicht des Festelektrolyten weist kontinuierliche und durchgehende und offene Poren auf, sodass das Eindringen eines gut benetzenden Infiltrationsfluids bis in tiefe Bereiche dieser Schicht ermöglicht wird. Die poröse Schicht des Festelektrolyten weist dazu Poren mit einem mittleren Porendurchmesser von ca. 1 bis 50 µm auf.

Das Infiltrationsfluid wird durch Lösen der entsprechenden Rohstoffe in Form von Vorläufern des gewünschten Kathoden- bzw. Anodenmaterials und gegebenenfalls weiterer Additive in wässrigen, anorganischen oder organischen Lösungen hergestellt. Geeignete organische Lösungen umfassen beispielsweise Kohlenwasserstoffe, Alkohole Ester oder Ketone.

Mögliche und geeignete Kathodenmaterialien für Natrium-Ionen-Festkörperbatterien sind Oxide in Form von NaₓMO₂ mit M = Ni, Co, Mn, Fe, V, Cr oder eine Kombination mehrerer dieser vorgenannten Elemente mit 0 < x < 1, Phosphate (z. B. Na₃V₂P₃O₁₂, Na₃Fe₂P₃O₁₂, Na₃Ti₂P₃O₁₂, Fluorphosphate (z.B. Na_{1,5}VOPO₄F_{0,5}, Na₂FePO₄F und Bimetallsulfate oder -silikate in Form von Na₂M(SO₄)₂ bzw. Na₂MSiO₄ mit M = Fe, Co, Ni, V, Cr oder eine Kombination mehrerer dieser vorgenannten Elemente.

Sowohl bei den Phosphaten als auch den Fluorphosphaten können zudem geringe Mengen der Metalle M = Fe, Co, Ni, V, Cr oder eine Kombination mehrerer dieser vorgenannten Elemente durch Substituenten, wie beispielsweise Mg, ersetzt werden.

Das Infiltrationsverfahren dieser Erfindung kann vorteilhaft auf Batterien mit einem der oben genannten Kathodenmaterialien angewendet werden.

Phosphate (z. B. Na₃V₂P₃O₁₂, Na₃Fe₂P₃O₁₂, Na₃Ti₂P₃O₁₂), Bimetallsulfate oder -silikate in Form von Na₂M(SO₄)₂ bzw. Na₂MSiO₄ mit M = Fe, Co, Ni, V, Cr oder eine Kombination mehrerer dieser vorgenannten Elemente) und Kohlenstoff sind als typische und geeignete Anodenmaterialien zu nennen.

Die ausgewählten Vorläuferverbindungen, die erfindungsgemäß in dem Infiltrationsfluid eingesetzt werden, bilden nach einer Wärmebehandlung *in-situ* das gewünschte Elektrodenmaterial aus, ohne dabei Verunreinigungen zu bilden oder Reste der Vorläuferverbindungen zu hinterlassen.

Zudem sind die Vorläuferverbindungen in dem ausgewählten organischen oder anorganischen Lösungsmittel ausreichend gut löslich. Sie liegen in dem Infiltrationsfluid stabil nebeneinander vor, ohne mit dem Lösungsmittel, den möglichen Additiven oder dem Festelektrolytmaterial zu reagieren.

Für die vorgenannten, geeigneten Elektrodenmaterialien gibt es viele verschiedene Arten von löslichen Vorläufern, die in dem Infiltrationsfluid eingesetzt werden können. Nachfolgend werden nur einige wenige Beispiele aufgeführt, wobei das Na in den Beispielen auch jeweils durch Li ersetzt werden kann.

Oxide, wie beispielsweise NaₓMO₂ mit M = Co, Ni, Mn, Fe, V, Cr etc. oder eine Kombination von mehr als einem dieser Elemente:
zum Beispiel kann durch Lösen von NaOH und Co₃O₄ in Wasser ein entsprechender Vorläufer hergestellt werden, der *in-situ* das Kathodenmaterial NaCoO₂ generiert.

Phosphate, wie beispielsweise Na₃V₂P₃O₁₂, Na₃Fe₂P₃O₁₂, Na₃Ti₂P₃O₁₂, ggfs. auch mit Substitutionselementen:
zum Beispiel kann durch Lösen von NaH₂PO₄ und NH₄VO₃ in einer Mischung aus Ethanolamin (Stabilisator) und Wasser ein entsprechender Vorläufer hergestellt werden, der *in-situ* das Kathodenmaterial Na₃V₂P₃O₁₂ generiert.

Fluorophosphate, wie beispielsweise Na_{1,5}VOPO₄F_{0,5}, Na₂FePO₄F, ggfs. auch mit Substitutionselementen:
zum Beispiel kann durch Lösen von NaH₂PO₄ und NH₄VO₃ und HF in einer Mischung aus Ethanolamin (Stabilisator) und Wasser ein entsprechender Vorläufer hergestellt werden, der *in-situ* das Kathodenmaterial Na_{1,5}VOPO₄F_{0,5} generiert.

Metallische Sulfate, wie beispielsweise Na₂M(SO₄)₂ mit M = Fe, Co, Ni, V, Cr etc. oder eine Kombination von mehr als einem dieser Elemente:
zum Beispiel kann durch Lösen von Na₂SO₄ und FeSO₄ in Wasser ein entsprechender Vorläufer hergestellt werden, der *in-situ* das Kathodenmaterial Na₂Fe(SO₄)₂ generiert.

Metallische Silikate, wie beispielsweise Na₂MSiO₄ mit M = Fe, Co, Ni, V, Cr etc. oder eine Kombination von mehr als einem dieser Elemente:
zum Beispiel kann durch Lösen von NaOH, Tetraethylorthosilikat und Fe(II)-Acetat tetra-Hydrat in Wasser ein entsprechender Vorläufer hergestellt werden, der *in-situ* das Kathodenmaterial Na₂FeSiO₄ generiert.

Das gewählte Lösungsmittel für das Infiltrationsfluid weist eine signifikante Löslichkeit für die ausgewählten Vorläuferverbindungen auf. Eine signifikante Löslichkeit ist gegeben, wenn das Infiltrationsfluid bei Raumtemperatur ein Anteil von 10 Gew.-% bis 90 Gew.-% an gelöster Vorläuferverbindung des aktiven Elektrodenmaterials aufweist.

Bei manchen Ausgangsstoffen kann es unter Umständen zu einer Oligomerisierung der komplexen Anionen kommen, wie z. B. die Bildung von Poly- oder Metaphosphorsäuren, Polysilikaten oder Polyvanadaten, die zu einer Sol- oder Gelbildung mit Trübung des Infiltrationsfluids und schließlich zur Bildung von Nanopartikeln (1 - 50 nm) führen kann. Dies ist im Sinne der Erfindung zulässig, solange diese Nanopartikel nicht die Infiltration bis an die Grenze zur dichten Elektrolytschicht behindern. In einem solchen Infiltrationsfluid (Suspension) sollte das Dispersionsmedium eine ausreichende Menge an Nanopartikeln (10 Gew.-% - 90 Gew.-%) stabilisieren, d.h. in der Schwebe halten können.

Das ausgewählte Lösungsmittel für das Infiltrationsfluid sollte zudem mit den Vorläuferverbindungen eine stabile Lösung ergeben, d.h. es sollte sich über einen Zeitraum von mehreren Tagen kein Bodensatz aus Ausgangschemikalien, Reaktionsprodukten oder Nanopartkein des aktiven Elektrodenmaterials gebildet haben. Sofern das Lösungsmittel allein die Vorläuferverbindungen noch nicht in signifikanten Mengen lösen kann oder aber die Vorläuferverbindungen zwar gelöst aber das Infiltrationsfluid nicht ausreichend stabil ist, kann optional wenigstens ein Stabilisator zugefügt werden.

Ein geeigneter Stabilisator kann beispielsweise mit der Vorläuferverbindung einen Koordinationskomplex ausbilden, und so zu einer verbesserten Löslichkeit der Vorläuferverbindung in dem Infiltrationsfluid führen. Dafür geeignete Stabilisatoren sind beispielsweise organische Chemikalien, wie Alkanolamine (Aminoalkohole), Ammoniumsalze oder auch Karbonsäuren.

Dabei kann die Wahl des optional zugegebenen Stabilisators von dem gewählten Vorläufermaterial abhängen. Beispielsweise hat sich der Zusatz von Alkanolamiden bei der Verwendung von Vanadium-haltigen Vorläuferverbindungen als sehr vorteilhaft zur Stabilisierung des Infiltrationsfluids herausgestellt.

Eine weitere wichtige Eigenschaft des Infiltrationsfluids ist dessen gute Benetzbarkeit in Bezug auf das Ionen leitende Material des mehrschichtigen Elektrolyten. Vorteilhaft ist dabei ein Kontaktwinkel < 90°. Je geringer der Kontaktwinkel ausfällt, desto besser ist die Benetzbarkeit und desto einfacher kann das Infiltrationsfluid in den durchgehenden Poren des Festelektrolyten bis in die tiefsten Bereiche eindringen.

Bei Bedarf, d.h. um beispielsweise für das Infiltrationsmedium in Bezug auf das Ionen leitende Material des mehrschichtigen Elektrolyten einen Kontaktwinkel von weniger als 90 ° einzustellen oder um einen Kontaktwinkel von weniger als 90 ° noch weiter herabzusetzen, kann daher zur Verbesserung der Benetzungseigenschaft des Infiltrationsfluids zusätzlich wenigstens ein Tensid zugesetzt werden. Unter einem Tensid wird hier eine amphiphile, organische Verbindung mit sowohl einer hydrophoben als auch einer hydrophilen Gruppen verstanden. Tenside in diesem Sinn sind beispielsweise Alkanolamin, Stearinsäure oder Ammoniumsalze. Die Zugabe wenigstens eines Tensids zum Infiltrationsfluid kann vorteilhaft die Benetzbarkeit optimieren und die Infiltration schneller und effektiver machen.

Neben den oben genannten Stabilisatoren und Tensiden schließen die erfindungsgemäßen möglichen weiteren Additive für das Infiltrationsfluid auch Materialien ein, die nach einer Wärmebehandlung des Festelektrolyten bzw. des gewählten Elektrodenmaterials eine elektronisch leitende Phase auszubilden vermögen.

Wird der Festelektrolyt mit den in der porösen Schicht eingebrachten Elektrodenvorläufern beispielsweise in einer reduzierenden Atmosphäre wärmebehandelt und ein organisches Lösungsmittel verwendet, so kann das organische Lösungsmittel in der porösen Festelektrolytschicht, in der das Elektrodenmaterial in-situ synthetisieret wird, regelmäßig - sofern es nicht selbst zu 100 % verdampft - selbst nach dem Sintern elektronisch leitenden Kohlenstoff ausbilden. Dies erfolgt regelmäßig, wenn beispielsweise hochsiedende Lösungsmittel, Stabilisatoren oder Tenside eingesetzt werden. Dies kann aber auch beim Einsatz von organischen Anionen, die in der Lösung enthalten sein können, auftreten.

In anderen Fällen, beispielsweise bei Verwendung von Wasser als Lösungsmittel, kann die elektronische Leitfähigkeit der hergestellten Elektrode nach der zweiten Wärmebehandlung auch durch weitere elektrisch leitende Zusätze zum Infiltrationsfluid, wie beispielsweise pulverförmiger Kohlenstoff oder pulverförmige Metalle, sichergestellt werden.

Um den Infiltrationsprozess zu starten, ist ein Kontakt zwischen dem Infiltrationsfluid und der porösen Schicht des Festelektrolyten notwendig. Dieser Kontakt kann beispielsweise durch teilweises oder vollständiges Eintauchen des Festelektrolyten in die Lösung oder durch Lackieren, Gießen, Fallenlassen der Lösung auf die Oberfläche der porösen Schicht des mehrschichtigen Festelektrolyten oder weitere typische Infiltrationsmethoden erreicht werden.

Weist das Infiltrationsfluid eine gute Benetzbarkeit in Bezug auf das Ionen leitende Material des Festelektrolyten auf, beispielsweise mit einem Kontaktwinkel < 90°, erfolgt die Infiltration regelmäßig automatisch über die Kapillarkräfte beim Kontakt von Infiltrationsfluid und porösem Elektrolyten.

Und selbst in den Fällen, wo ggfs. ein Infiltrationsfluid eingesetzt werden soll, welches einen größeren Benetzungswinkel aufweisen würde, kann beispielsweise eine Vorrichtung, z. B. eine Vakuumkammer mit einer Luftpumpe, die den Luftdruck um den Träger herum verändern kann, den Prozess der Infiltration in Bezug auf Geschwindigkeit und Menge des Infiltrationsfluids verbessern. Auf diese Weise wird beispielsweise zunächst die Luft durch Verringerung des Luftdrucks aus den Poren des Elektrolyten gepumpt, das Infiltrationsfluid aufgebracht und anschließend durch Erhöhung des Drucks in die Poren gedrückt.

Falls durch eine einmalige Infiltration noch nicht die gewünschte Menge an Elektrodenmaterialien in die poröse Schicht eingebracht werden kann, kann die Infiltration vorzugsweise auch mehrmals hintereinander durchgeführt werden.

Dabei bestimmen die Porosität und der Porendurchmesser des Festelektrolyten die maximale Beladung bzw. die Konzentration der Lösung die Menge pro Infiltrationsschritt.

Zwischen zwei Infiltrationen kann vorzugsweise eine erste Wärmebehandlung, z. B. eine Trocknung, durchgeführt werden, um die bereits infiltrierten Vorläuferverbindungen in Form von aktivem Elektrodenmaterial auf der Porenoberfläche zu fixieren. Unter einer Trocknung wird hier eine Wärmebehandlung bei maximal 150 °C verstanden.

Nach der Infiltration und ggfs. Trocknung des Lösungsmittels wird die hergestellte Elektroden-Festelektrolyt-Komponente einer weiteren, zweiten Wärmebehandlung unterzogen. In diesem Fall erfolgt eine Wärmebehandlung bei Temperaturen zwischen 400 °C und 900 °C, um die *in-situ* Synthese des Elektrodenmaterials zu bewirken und um eine reine Phase des Elektrodenmaterials auf der Oberfläche der Poren auszubilden.

Die Atmosphäre und das Temperaturprofil der zweiten Wärmebehandlung werden entsprechend den Eigenschaften des verwendeten Elektrodenmaterials ausgewählt und optimiert. Als Atmosphäre kann dabei beispielsweise reiner Wasserstoff, eine Mischung aus Wasserstofffund Argon, reines Argon, Luft oder auch reiner Sauerstoff eingesetzt werden.

Bei einigen Kathodenmaterialien, die beispielsweise Fe²⁺ oder V³⁺-Kationen aufweisen, ist zwingend eine reduzierende Atmosphäre vorgesehen, während andere Kathodenmaterialien besser in einer oxidierenden Atmosphäre, wie beispielsweise Luft, wärmebehandelt werden sollten.

Die elektrochemische Zelle auf Basis des infiltrierten Festelektrolyten kann nun endgültig montiert werden. Bei Einsatz eines dreischichtigen Festelektrolyten (porös - dicht - porös) werden die Elektroden und der Festelektrolyt bereits durch die erfindungsgemäße Infiltration hergestellt. Bei Einsatz eines zweischichtigen Festelektrolyten wird in der Regel nur eine Elektrode durch die erfindungsgemäße Infiltration generiert, während die andere Elektrode durch andere Methoden, wie z. B. direkte Applikation von Natrium-Metall, hergestellt werden kann.

Die elektrochemische Zelle kann anschließend in gewohnter Weise mit einem Gehäuse leitend verbunden werden. Die elektrochemische Zelle kann nun dabei einzeln oder als Stapel als funktionsfähige Batterie angeordnet werden.

Die spezifische Kapazität, ausgedrückt in mAh/g, der durch die vorliegende Erfindung hergestellten Batterien betrug bei ausgewählten Ausführungsbeispielen mehr als 90 % der theoretischen Kapazität.

Die Degradation der Batterien konnte auf weniger als 10 % der Startkapazität bei einer Lade/Entladegeschwindigkeit von 0,1 C bis 1,0 C in 100 Zyklen gesenkt werden. Der damit erzielte coulombsche Wirkungsgrad lag nach dem ersten Zyklus bei mehr als 99 %.

Es hat sich herausgestellt, dass die erfindungsgemäß hergestellten Batterien deutliche Vorteile gegenüber den bislang bekannten Batterien aufweisen. Dies gilt in besonderem Maße für Natrium-Festkörperbatterien.

Sie zeigen beispielsweise eine bessere Performance als bisherige Natrium-Festkörperbatterien, die bei Raumtemperatur betrieben werden können ([1]: 80 % Kapazitätsverlust nach 10 Zyklen, coulombscher Wirkungsgrad weniger als 75 %) und sogar als bisherige Natrium-Festkörperbatterien, die bei 80 °C betrieben werden ([11]: 35 % Kapazitätsverlust nach 40 Zyklen).

Die vorliegende Erfindung bewirkt offensichtliche Vorteile in der Batterieleistung gegenüber bislang bekannten Festkörperbatterien. Die vorteilhafte Wirkungsweise basiert auf einem aktiven Kontakt zwischen dem Festelektrolyten und den Elektrolytmaterialien, der zu einem ununterbrochenen elektronischen und ionischen Leitungsweg führt. Die Vorteile ergeben sich dabei aus der Mikrostruktur des porösen keramischen Festelektrolyten und den *in-situ* generierten Elektrodenmaterialien auf der Oberfläche der Poren.

Erfindungsgemäß kann das vorgeschlagene Infiltrationsfluid besser als bisher in die tiefen Bereiche der porösen Struktur des Festelektrolyten eindringen und einerseits zu einer sehr homogenen Verteilung des Elektrodenmaterials und anderseits zu einer hohen Materialdichte an Elektrodenmaterial innerhalb der so generierten Elektrode führen.

Zur Herstellung einer erfindungsgemäßen Elektrode für eine wieder aufladbare Festkörperbatterie wird vorgeschlagen, zunächst einen Vorläufer des aktiven Elektrodenmaterials als Lösung oder zusammen mit weiteren Additiven gegebenenfalls als Suspension vorzubereiten, die einerseits eine möglichst hohe Konzentration an aktivem Elektrodenmaterialvorläufer umfasst und andererseits eine hohe Benetzbarkeit des lonenleitermaterials des Festelektrolyten, in welches das Infiltrationsfluid infiltriert wird, aufweisen sollte.

Die Lösung mit dem aktiven Elektrodenmaterialvorläufer wird anschließend in den porösen Teil eines schichtförmig ausgebildeten, porösen Festelektrolyten infiltriert. Es folgt eine erste Wärmebehandlung zur Trocknung des Infiltrationsfluid und zur Fixierung der Elektrodenmaterialvorläuferverbindungen in den Poren. Diese beiden Schritte können bei Bedarf mehrmals wiederholt werden, um eine ausreichende Menge an Elektrodenmaterialvorläuferverbindungen in die Poren des porösen Elektrolyten einzubringen.

Vorteilhaft reicht das infiltrierte Elektrodenvorläufermaterial in den Poren bis zum Übergang der porösen und der dichten Schicht des Festelektrolyten.

Im Idealfall kann das Elektrodenmaterialvorläuferverbindungen die Poren vollständig ausfüllen.

Um die Infiltrationsschritte zu minimieren, kann vorzugsweise ein möglichst hochkonzentriertes Infiltrationsfluid eingesetzt werden.

### Spezieller Beschreibungsteil

Während die Erfindung im vorangehenden Teil der Anmeldung in einer bevorzugten Ausgestaltung insbesondere anhand von Natrium-Ionen leitenden Festelektrolyten und entsprechenden Elektroden eingehend beschrieben und bebildert wurde, soll auch die nachfolgende Beschreibung und die Figuren lediglich als Beispiel gelten, ohne dadurch einschränkend zu wirken.

Es ist davon auszugehen, dass ein Fachmann im Rahmen seines Fachwissens selbst weitere Änderungen und Modifikationen der nachfolgenden Ansprüche vornehmen würde und könnte, die durch den Schutzbereich der Ansprüche mit abgedeckt sind. Insbesondere sind im Rahmen der Erfindung weitere Ausführungsformen mit jeder Art von Kombinationen der erwähnten Merkmale einzelner Ausführungsbeispiele mit umfasst.

Die Merkmale der unterschiedlichen Ausführungsformen dieser Erfindung und ihre jeweiligen Vorteile werden beim Lesen der nachfolgend ausgeführten Ausführungsbeispiele in Zusammenhang mit den Figuren offenbart. Dabei zeigen:
- Figur 1:: Darstellung der ionischen Gesamtleitfähigkeit bei 25 °C in Abhängigkeit von der Zusammensetzung für die Mischungsreihen Na₃₊ₓZr₂(SiO₄)₂₊ₓ(PO₄)₁₋ₓ und Na₃₊ₓScₓZr₂₋ₓ(SiO₄)₂(PO₄).
- Figur 2:: Schematische Darstellung einer erfindungsgemäßen Festkörperbatterie, oben: mit einem zweischichtiger Festelektrolyt mit aktivem Elektrodenmaterial innerhalb der Poren der porösen Schicht sowie Stromsammler und zweiter Elektrode, unten: dreischichtiger Festelektrolyt mit aktivem Elektrodenmaterial sowohl in der oberen als auch der unteren porösen Schicht.
- Figur 3:: Darstellung der Zyklisierungseigenschaften einer NVP-NZSP-Na Batteriezelle bei 25 °C bei unterschiedlichen Stromdichten: hier Entladekapazitäten und coulombscher Wirkungsgrad der einzelnen Zyklen (40).
- Figur 4:: Darstellung der Zyklisierungseigenschaften einer NVP-NZSP-Na Batteriezelle bei 25 °C und einer Stromdichte von 20 mA (0,1 C): hier Entladekapazitäten und coulombscher Wirkungsgrad für die ersten 50 Zyklen.

In einer vorteilhaften Ausgestaltung der Erfindung kann auch der mehrschichtige Festelektrolyt selbst hergestellt werden.

Dabei umfassen die poröse Schicht oder die porösen Schichten des Festelektrolyten vorzugsweise dasselbe Na- oder Li-Ionen leitende Material, wie es in der dichten Schicht vorliegt, sowie zusätzlich einen Porenbildner.

Als Porenbildner kann beispielsweise eine makromolekulare, organische Verbindung eingesetzt werden, die kontinuierliche, d.h. durchgehende und offene Poren mit einer geeigneten Größe von vorzugsweise weniger als 10 µm Durchmesser in der porösen Festelektrolytschicht erzeugen kann.

Die Porosität sollte einerseits sehr hoch gewählt werden, um möglichst viel aktives Elektrodenmaterial an der Oberfläche anzuordnen. Auf der anderen Seite muss eine gewisse Stabilität des Elektrolyten sichergestellt werden, so dass für die poröse Schicht in der Regel das Elektrolytmaterial 30 bis 40 % des Volumens des Festelektrolyten ausmacht.

Als geeignete Verbindungen für einen Porenbildner sind hier beispielsweise zu nennen: verschiedene Arten von Stärke, Cellulose und Polymere, die vorzugsweise Poren im Bereich von 0,5 bis 50 mm ausbilden.

Bei der Auswahl der Rohstoffe für den Festelektrolyten ist besonders auf die Leitfähigkeit des Na- oder Li-Ionen leitenden Materials und die richtige Art des Porenbildners, beispielsweise die Partikelform des Porenbildners, zu achten.

Es hat sich beispielsweise herausgestellt, dass der in der Literatur bereits verwendete Li₇La₃Zr₂O₁₂ (LLZO) basierte Elektrolyt ^{[1]} für Lithium-Ionen-Festkörperbatterien keine ausreichend hohe Leitfähigkeit aufweist, insbesondere bei der dort vorliegenden Porosität, um im Sinne dieser Erfindung als effektiver lonenleiter zu gelten. Zudem führte die Verwendung von Graphit als Porenbildner bei dem vorgenannten Beispiel zu einer nur mangelnden Offenheit der Poren und damit zu einer Verringerung der Infiltrationswirkung. Insofern ist Graphit im Sinne dieser Erfindung nicht als Porenbildner geeignet.

Der Grünkörper der Festelektrolytschichten für die Festkörperbatterie kann durch das Zusammenbringen wenigstens einer dichten und einer porösen Elektrolytschicht vorbereitet werden. Mögliche Verfahren für dieses Zusammenbringen sind beispielsweise das Zusammenpressen von zwei oder mehr Pulverschichten, das Bandgießen von wenigstens zwei Schichten und der Siebdruck einer Schicht auf einer bereits vorhandenen Schicht.

Der Grünkörper der Festelektrolytschichten kann in oxidierender Atmosphäre entsprechend der Verdichtungstemperatur der jeweiligen Materialien (800 - 1300 °C) gesintert werden, um einerseits die als Elektrolytschicht vorgesehenen Schicht zu verdichten und andererseits den Porenbildner aus der wenigstens einen porösen Schicht des Festelektrolyten zu entfernen, die später eine Elektrode bilden soll, um so durchgehende Poren in der späteren Elektrode auszubilden.

Die Menge an Porenbildnern in der Mischung beträgt regelmäßig zwischen 10 und 90 Vol.-%. Die Vorbereitung des Grünkörpers und die Sinterung können auf Basis der Sintereigenschaften des verwendeten Ionen leitenden Materials optimiert werden. Ziel sollte es sein, eine hohe Dichte in der dichten Schicht (über 95% der theoretischen Dichte), eine hohe Porosität in der porösen Schicht (20 % bis 80 % des Volumens) sowie eine gute Verbindung zwischen den beiden Schichten zu erreichen. Dies kann beispielsweise durch die Sinterung erzielt werden.

In einem bevorzugten Ausführungsbeispiel der Erfindung wird ein zweischichtiger Festelektrolyt umfassend Na_{3,4}Zr₂Si_{2,4}P_{0,6}O₁₂ (NZSP) für eine Natrium-Batterie hergestellt. Dazu kann zunächst NZSP-Pulver - wie beispielsweise in DE 102015013155 A1 beschrieben - hergestellt werden.

Für die poröse Schicht wird NZSP-Pulver mit 10 Gew.-% Reisstärke, die als Porenbildner dient, vermischt und für 24 Stunden in Ethanol in einer Kugelmühle gemahlen.

Anschließend werden 0,3 g NZSP-Pulver und 50 mg der oben hergestellten Mischung mit einer Partikelgröße zwischen 1 und 2 µm schichtweise in eine zylindrische Pressform mit einem Durchmesser von 13 mm gegeben und anschließend von einer Pressmaschine mit einer einachsigen Kraft von 15 kN für 1,5 Minuten zu einem Grünkörper zusammengepresst. Anschließend wird der Grünkörper bei 1280 °C für 6 Stunden gesintert. Es entsteht ein wei-ßes, zweischichtiges Elektrolytpellet umfassend Na_{3,4}Zr₂Si_{2,4}P_{0,6}O₁₂ mit einer dichten sowie mit einer porösen Schicht.

In diesem Ausführungsbeispiel wird Na₃V₂(PO₄)₃ (NVP) als Kathodenmaterial ausgewählt.

Für das Infiltrationsfluid wird eine Mischung aus NH₄VO₃ (NV), NaH₂PO₄ (NHP) und Ethanolamin (EA) in Wasser hergestellt. Dabei bilden NV und NHP die Rohstoffe (Vorläuferverbindungen) für das Kathodenmaterial NVP. Ethanolamin (EA) dient einerseits als Stabilisator und wirkt gleichzeitig als Tensid. Das Gewichtsverhältnis von EA, Wasser, NV und NHP beträgt 1:2:0,46:0,71.

Anschließend erfolgt die Infiltration des vorbereiteten Infiltrationsfluids in den porösen Bereich des zweischichtigen Elektrolytpellets. Dazu wird das Infiltrationsfluid mit einem Benetzungswinkel zwischen 10 und 15 ° auf die Oberfläche der porösen Schicht getropft.

Der Vorgang des Infiltrierens wird drei Mal wiederholt, wobei sich jeweils eine Wärmebehandlung in Form einer Trocknung anschließt.

Anschließend wird das Elektrolytpellet einer weiteren, zweiten Wärmebehandlung unterzogen. Dazu wird das Elektrolytpellet in einer Ar/H₂-Atmosphäre für 3 Stunden auf 730 °C erhitzt, um das aktive Kathodenmaterial Na₃V₂(PO₄)₃ (NVP) auf der Oberfläche der Poren auszubilden (in-situ-Synthese).

Die Mikrostruktur der infiltrierten porösen Schicht des Festelektrolyten kann anschließend beispielsweise über eine rasterelektronenmikroskopische Aufnahme des Querschnitts des Elektrolytpellets überprüft werden.

Eine so hergestellte NVP-NZSP-Natrium-Halbzelle wird mit einer weiteren Elektrode versehen und zu einer Natrium-Festkörperbatterie zusammengesetzt.

Dazu wird zunächst Gold auf die poröse Oberfläche des mehrschichtigen Elektrolyten gesputtert. Dann wird der äußere Rand mit Schleifpapier entfernt, um das Auftreten von Gold oder Kohlenstoff am Rand zu vermeiden. Die äußere Oberfläche der dichten Schicht des Elektrolyten wird ebenfalls mit Schleifpapier poliert.

Der infiltrierte mehrschichtige Elektrolyt wird anschließend in eine Ar-gefüllte Handschuhbox überführt, in dem ein rundes Stück metallisches Natrium als Anode auf die dichte Schicht des Elektrolyten gedrückt wird.

Diese Zelle wird in ein Swagelok Batteriegehäuse eingeschweißt.

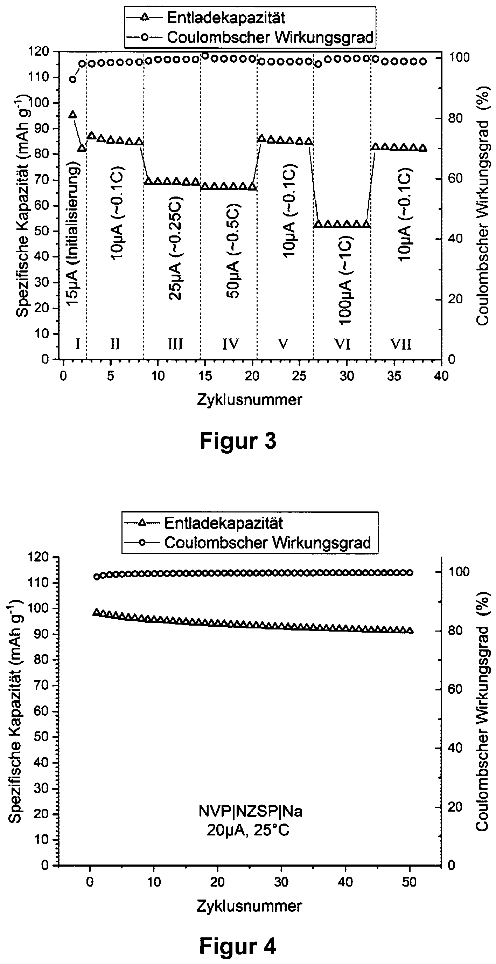

Die Batterieprüfung für die erfindungsgemäß hergestellte Natrium-Ionen-Festkörper-Batterie wurde mit einem elektrochemischen Prüfsystem durchgeführt. Die NVP-NZSP-Na Batteriezelle wurde mit unterschiedlichen Stromdichten geladen und entladen. Die dabei gemessene spezifische Kapazität für die ersten 40 Zyklen ist in Figur 3 dargestellt. Erkennbar ist eine sehr geringe Degradation.

Für die Leitfähigkeitsmessungen wurden die gemahlenen Pulver in eine zylindrische Pressform mit einem Durchmesser von 8 bis 13 mm eingebracht und mit einem einachsigen Druck von 100 MPa bei Raumtemperatur gepresst. Die gepressten Pellets wurden dann 5 h lang bei 1250 °C bis 1300 °C gesintert. Die erhaltenen Pellets hatten einen Durchmesser von 6,5-10,5 mm und eine Dicke von etwa 1 mm.

Die dichten Pellets wurden beidseitig mit Gold bedampft. Die Impedanzspektren der Proben wurden bei 25 °C mit zwei handelsüblichen elektrochemischen Systemen (Keysight E4991B und Biologie VMP-300) mit einem Frequenzbereich von 3 GHz bis 1 MHz bzw. 3 MHz bis 1 Hz gemessen. Die Ergebnisse wurden entsprechend der Größe der Proben durch Multiplikation mit der leitenden Fläche und Division mit der Dicke der Proben verrechnet und mit der Software "Z-view" (Scribner Associates Inc.) angepasst. Die Temperatur wurde mit Hilfe einer Klimakammer (Vötsch, VT4002) geregelt.

### In der Anmeldung zitierte Nicht-Patentliteratur:

[1] Atsushi Inoishi, Takuya Omuta, Eiji Kobayashi , Ayuko Kitajou, Shigeto Okada, A Single-Phase, All-Solid-State Sodium Battery Using Na3-xV2-xZrx(PO4)3 as the Cathode, Anode, and Electrolyte, Adv. Mater. Interfaces 2017, 4, 1600942.
[2] Masashi Kotobuki, Hirokazu Munakata, Kiyoshi Kanamura, Fabrication of all-solid-state rechargeable lithium-ion battery using mille-feuille structure of Li0.35La0.55TiO3, Journal of Power Sources, Volume 196, Issue 16, 15 August 2011, Pages 6947-6950.
[3] Yaoyu Ren, Ting Liu, Yang Shen, Yuanhua Lin, Ce-Wen Nan, Garnet-type oxide electrolyte with novel porous-dense bilayer configuration for rechargeable all-solid-state lithium batteries, lonics 2017. 23(9): Seiten 2521 bis 2527, https://doi.org/10.1007/s11581-017-2224-5.
[4] Carlos Bernuy-Lopez William Manalastas Jr. Juan Miguel Lopez del Amo, Ainara Aguadero, Frederic Aguesse, John A. Kilner, Atmosphere Controlled Processing of Ga-Substituted Garnets for High Li-Ion Conductivity Ceramics,
   Chem. Mater., 2014, 26, Seiten 3610 bis 3617,
   DOI: 10.1021/cm5008069.
[5] Eongyu Yi, Eleni Temeche, Richard M. Laine, Superionically conducting β"-Al2O3 thin films, processed using flame synthesized nanopowders, J. Mater. Chem. A, 2018, 6.1241, DOI: 10.1039/c8ta02907e .
[6] T. Suzuki, K. Yoshida, K. Uematsu, T. Kodama, K. Toda , Z.-G. Ye , M. Sato, Solid State lonics 104 (1997) 27-33.
[7] H. F. Peng, M. L. Gao, M. F. Wang, C. X. Chen, Chin. J. Inorg. Chem. 27 (2011) 1969-1974.
[8] A. Rossbach, F. Tietz, S. Grieshammer, Journal of Power Sources 391 (2018) 1-9.
[9] F. E. Mouahid, M. Bettach, M. Zahir, P. Maldonado-Manso, S. Bruque, E. R. Losilla, M. A. G. Aranda, J. Mater. Chem. 10 (2000) 2748-2753.
[10] P. Kumar Nayak, L. Yang, W. Brehm, Ph. Adelhelm, Angew. Chem. - Int. Ed. 57 (2018) 102-120; und
   M. Goktas, Ch. Bolli, E. J. Berg, , P. Novák, K. Pollok, F. Langenhorst, M. von Roeder, O. Lenchuk, D. Mollenhauer, Ph. Adelhelm, Adv. Energy Mater. 8 (2018) 1702724.
[11] Yan Zhang, Chiwei Wang, Hongshuai Hou, Guoqiang Zou, Xiaobo Ji, Sodium-Ion Batteries: Nitrogen Doped/Carbon Tuning Yolk-Like TiO2 and Its Remarkable Impact on Sodium Storage Performances, Adv. Energy Mater. 2017, 7(4): 1601196.

## Patentansprüche

1. Verfahren zur Herstellung einer Elektrode für eine Festkörperbatterie, mit den Schritten:
- es wird ein mehrschichtiger keramischer Festelektrolyt bereitgestellt,
der wenigstens eine dichte sowie wenigstens eine poröse Schicht umfasst,
wobei die dichte Schicht eine Gesamt-Ionenleitfähigkeit von wenigstens 1 mS/ cm bei 25 °C aufweist und
wobei die poröse Schicht kontinuierliche und offene Poren mit einem mittleren Porendurchmesser zwischen 1 und 50 µm aufweist,
- es wird ein wässriges Infiltrationsfluid bereitgestellt, in der wenigstens ein Vorläufer eines Elektrodenmaterials gelöst vorliegt; und welches wenigstens einen organischen Zusatz aufweist, der zumindest teilweise in Kohlenstoff umgewandelt werden kann,
- das Infiltrationsfluid mit dem wenigstens einen Vorläufer eines Elektrodenmaterials wird in wenigstens eine poröse Schicht des Festelektrolyten eingebracht;
- der Festelektrolyt wird einer Wärmebehandlung in Form einer Sinterung in reduzierender Atmosphäre bei Temperaturen zwischen 400 °C und 900 °C unterzogen, wodurch aus dem Vorläufer des Elektrodenmaterials auf der Oberfläche der Poren *in-situ* das Elektrodenmaterial synthetisiert wird.

2. Verfahren nach Anspruch 1,
bei dem ein Infiltrationsfluid umfassen eine anorganische Lösung als organischen Zusatz, insbesondere CS₂ oder PB₃, oder eine organische Lösung, insbesondere Alkohole, Ester oder Ketone, bereit gestellt wird.

3. Verfahren nach einem der Ansprüche 1 bis 2,
bei dem dem Infiltrationsfluid zusätzlich wenigstens ein Stabilisator zugegeben wird.

4. Verfahren nach einem der Ansprüche 1 bis 3,
bei dem dem Infiltrationsfluid zusätzlich ein Stabilisator umfassend Alkanolamin, Karbonsäuren oder Ammoniumsalze und/oder ein Tensid zugegeben wird.

5. Verfahren nach einem der Ansprüche 1 bis 4,
bei dem dem Infiltrationsfluid zusätzlich ein Elektronen leitendes Material zugegeben wird.

6. Verfahren nach einem der Ansprüche 1 bis 5,
bei dem ein Natrium-Ionen leitender Festelektrolyt umfassend
- β-Na₂O-11Al₂O₃ oder
- β"-Na₂O-5Al₂O₃ oder
- ein Natrium-Super-lonenleiter in Form von A_{1+x+y}M'ₓM"₂₋ₓ(XO₄)_{3-y}(SiO₄)_{y},
mit A = Na, M' = Hf, Zr, M" = La - Lu oder Sc oder Y und X = P oder As und 0 < x < 2 und 0 < y < 3 eingesetzt wird.

7. Verfahren nach Anspruch 6,
bei dem ein Natrium-Ionen leitender Festelektrolyt mit einer Gesamt-Ionenleitfähigkeit von wenigstens 3 mS/ cm bei 25 °C eingesetzt wird.

8. Verfahren nach einem der Ansprüche 1 bis 7,
bei dem ein Festelektrolyt eingesetzt wird, dessen poröse Schicht kontinuierliche und offene Poren mit einem mittleren Durchmesser von weniger als 10 µm aufweist.

9. Verfahren nach einem der Ansprüche 1 bis 8,
bei dem als Vorläufer für ein Kathodenmaterial Oxide, Phosphate, Fluorophosphate, metallische Sulfide oder metallische Silikate eingesetzt werden

10. Verfahren nach einem der Ansprüche 1 bis 9,
bei dem als Vorläufer für ein Anodenmaterial Phosphate oder Bimetallsulfate eingesetzt werden.

11. Verfahren nach einem der Ansprüche 1 bis 10,
bei dem der Vorläufer für das Elektrodenmaterial mit einem Anteil von 30 bis 40 Gew.-% in dem Infiltrationsfluid eingesetzt wird.

12. Verfahren nach einem der Ansprüche 1 bis 11,
bei dem mehrmals nacheinander Infiltrationsfluid mit dem wenigstens einen Vorläufer eines Elektrodenmaterials in den porösen Bereich des Festelektrolyten eingebracht und getrocknet wird, bevor der Festelektrolyt der Wärmebehandlung bei Temperaturen zwischen 400 °C und 900 °C unterzogen wird.

13. Festkörperbatterie, hergestellt gemäß dem Verfahren nach dem Anspruch 1, umfassend einen mehrschichtigen keramischen Festelektrolyten,
- der wenigstens eine dichte sowie eine poröse Schicht aufweist;
- bei dem die dichte Schicht eine Gesamt-Ionenleitfähigkeit von wenigstens 1 mS/ cm bei 25 °C aufweist;
- bei dem die poröse Schicht kontinuierliche und offene Poren mit einem mittleren Durchmesser von weniger als 10 µm aufweist, und bei dem auf der Oberfläche der Poren aktives Elektrodenmaterial angeordnet ist.

14. Festkörperbatterie nach Anspruch 13,
umfassend einen Natrium-Ionen leitenden Festkörperelektroyten, dessen dichte Schicht eine Gesamt-Ionenleitähigkeit von wenigstens 3 mSI cm bei 25 °C aufweist.

## Claims

1. A method for manufacturing an electrode for a solid-state battery, comprising the steps:
- providing a multi-layer ceramic solid electrolyte which comprises at least one dense and at least one porous layer,
wherein said dense layer has a total ionic conductivity of at least 1 mS/cm at 25°C, and
wherein the porous layer has continuous and open pores with an average pore diameter of between 1 and 50 µm;
- providing an aqueous infiltration fluid in which at least one precursor of an electrode material is present in dissolved form and which has at least one organic additive that can be converted at least partially into carbon;
- introducing the infiltration fluid with the at least one precursor of an electrode material into at least one porous layer of the solid electrolyte;
- subjecting the solid electrolyte to a heat treatment in the form of sintering in a reducing atmosphere at temperatures between 400 °C and 900 °C, whereby the electrode material is synthesized *in situ* from the precursor of the electrode material on the surface of the pores.

2. The method as set forth in claim 1,
wherein an infiltration fluid is provided which comprises an inorganic solution as an organic additive, particularly CS₂ or Pb₃, or an organic solution, particularly alcohols, esters, or ketones.

3. The method as set forth in any one of claims 1 to 2,
wherein at least one stabilizer is additionally added to the infiltration fluid.

4. The method as set forth in any one of claims 1 to 3,
wherein a stabilizer comprising alkanolamine, carboxylic acids, or ammonium salts and/or a surfactant is additionally added to the infiltration fluid.

5. The method as set forth in any one of claims 1 to 4,
wherein an electron-conducting material is additionally added to the infiltration fluid.

6. The method as set forth in any one of claims 1 to 5,
wherein a sodium-ion-conducting solid electrolyte is used which comprises
- β-Na₂O-11Al₂O₃ or
- β"-Na₂O-5Al₂O₃ or
- a sodium superionic conductor in the form of A_{1+x+y}M'ₓ,M"₂₋ₓ,(XO₄)_{3-y}(SiO₄)_{y},
where A = Na, M' = Hf, Zr, M" = La - Lu or Sc or Y and X = P or As and 0 < x < 2 and 0 < y < 3.

7. The method as set forth in claim 6,
wherein a sodium-ion-conducting solid electrolyte is used which has a total ionic conductivity of at least 3 mS/cm at 25 °C.

8. The method as set forth in any one of claims 1 to 7,
wherein a solid electrolyte is used whose porous layer has continuous and open pores with an average diameter of less than 10 µm.

9. The method as set forth in any one of claims 1 to 8,
wherein oxides, phosphates, fluorophosphates, metallic sulfides, or metallic silicates are used as precursors for a cathode material.

10. The method as set forth in any one of claims 1 to 9,
wherein phosphates or bimetallic sulfates are used as precursors for an anode material.

11. The method as set forth in any one of claims 1 to 10,
wherein the precursor for the electrode material is used in the infiltration fluid in a proportion of 30 to 40% by weight.

12. The method as set forth in any one of claims 1 to 11,
wherein infiltration fluid comprising the at least one precursor of an electrode material is introduced multiple times in succession into the porous region of the solid electrolyte and dried before the solid electrolyte is subjected to heat treatment at temperatures between 400 °C and 900 °C.

13. A solid-state battery manufactured according to the method as set forth in claim 1,
comprising a multilayer ceramic solid electrolyte
- having at least one dense and one porous layer,
- the dense layer of which has a total ionic conductivity of at least 1 mS/cm at 25°C, and
- the porous layer of which has continuous and open pores with an average diameter of less than 10 µm, and in which active electrode material is arranged on the surface of the pores.

14. The solid-state battery as set forth in claim 13,
comprising a sodium-ion-conducting solid-state electrolyte, the dense layer of which has a total ionic conductivity of at least 3 mS/cm at 25 °C.

## Revendications

1. Procédé de fabrication d'une électrode d'une batterie à électrolyte solide, comprenant les stades :
- on se procure un électrolyte solide céramique à plusieurs couches, qui comprend au moins une couche dense, ainsi qu'au moins une couche poreuse,
dans lequel la couche dense à une conductivité ionique d'ensemble d'au moins 1 mS/cm à 25° C et
dans lequel la couche poreuse a des pores continus et ouverts, ayant une dimension moyenne de pore comprise entre 1 et 50 µm,
- on se procure un fluide aqueux d'infiltration, dans lequel il y a, à l'état dissout, au moins un précurseur d'un matériau d'électrode ; et qui a au moins un additif organique, qui peut être transformé au moins en partie en carbone,
- on introduit le fluide d'infiltration, ayant le au moins un précurseur d'un matériau d'électrode, dans au moins une couche de l'électrolyte solide,
- on soumet l'électrolyte solide à un traitement à la chaleur, sous la forme d'un frittage en atmosphère réductrice, à des températures comprises entre 400° C et 900° C,
grâce à quoi on synthétise le matériau d'électrode in-situ à la surface des pores, à partir du précurseur du matériau d'électrode.

2. Procédé suivant la revendication 1,
dans lequel on se procure un fluide d'infiltration comprenant une solution minérale comme additif organique, notamment du CS₂ ou du PB₃, ou une solution organique, notamment d'alcools, d'esters ou de cétones.

3. Procédé suivant l'une des revendications 1 à 2,
dans lequel on ajoute au moins un stabilisant supplémentairement au fluide d'infiltration.

4. Procédé suivant l'une des revendications 1 à 3,
dans lequel on ajoute un stabilisant comprenant une alcanolamine, des acides carboxyliques ou des sels d'ammonium et/ou un agent tensioactif supplémentairement au fluide d'infiltration.

5. Procédé suivant l'une des revendications 1 à 4,
dans lequel on ajoute un matériau conduisant les électrons supplémentairement au fluide d'infiltration.

6. Procédé suivant l'une des revendications 1 à 5,
dans lequel on utilise un électrolyte solide conduisant les ions sodium comprenant
- β-Na₂O-11Al₂O₃ ou
- β"-Na₂O-5Al₂O₃ ou
- un superconducteur d'ions sodium, sous la forme de A_{1+x+y}M'ₓM"₂₋ₓ(XO₄)_{3-y}(SiO₄)_{y} et A = Na, M' = Hf, Zr, M" = La - Lu ou Sc ou Y et X = P ou As et 0 < x < 2 et 0 < y < 3.

7. Procédé suivant la revendication 6,
dans lequel on utilise un électrolyte solide conduisant les ions sodium, ayant une conductivité ionique d'ensemble d'au moins 3 mS/cm à 25° C.

8. Procédé suivant l'une des revendications 1 à 7,
dans lequel on utilise un électrolyte solide, dont la couche poreuse a des pores continus et ouverts ayant un diamètre moyen de moins de 10 µm.

9. Procédé suivant l'une des revendications 1 à 8,
dans lequel on utilise, comme précurseur d'un matériau de cathode, des oxydes, des phosphates, des fluorophosphates, des sulfures métalliques ou de silicates métalliques.

10. Procédé suivant l'une des revendications 1 à 9,
dans lequel on utilise, comme précurseur d'un matériau d'anode, des phosphates ou des sulfates bimétalliques.

11. Procédé suivant l'une des revendications 1 à 10,
dans lequel on utilise le précurseur du matériau d'électrode en une proportion de 30 à 40 % en poids dans le fluide d'infiltration.

12. Procédé suivant l'une des revendications 1 à 11,
on introduit, plusieurs fois successivement, du fluide d'infiltration ayant le au moins un précurseur d'un matériau d'électrode, dans la partie poreuse de l'électrolyte solide, et on sèche, avant de soumettre l'électrolyte solide au traitement à la chaleur à des températures comprises entre 400° C et 900° C.

13. Batterie à électrolyte solide fabriquée par le procédé suivant la revendication 1, comprenant un électrolyte solide céramique à plusieurs couches,
- qui a au moins une couche dense ainsi qu'une couche poreuse ;
- dans lequel la couche dense a une conductivité ionique d'ensemble d'au moins 1 mS/cm à 25° C ;
- dans lequel la couche poreuse a des pores continus et ouverts, ayant un diamètre moyen de moins de 10 µm, et dans lequel du matériau actif d'électrode est mis à la surface des pores.

14. Batterie à électrolyte solide suivant la revendication 13, comprenant un électrolyte solide conduisant les ions sodium, dont la couche dense a une conductivité ionique d'ensemble d'au moins 3 mS/cm à 25°C.
